Europäisches Patentamt

European Patent Office

Office européen des brevets

(19)

(11) Veröffentlichungsnummer: **0 288 695**
**B1**

(12)    # EUROPÄISCHE PATENTSCHRIFT

(45) Veröffentlichungstag der Patentschrift: **23.01.91**

(51) Int. Cl.⁵: **F 24 D 11/00**

(21) Anmeldenummer: **88103559.6**

(22) Anmeldetag: **08.03.88**

(54) Brennwert-Heizkessel und Verfahren zu seinem Betreiben.

(30) Priorität: **29.04.87 DE 3714261**

(43) Veröffentlichungstag der Anmeldung:
**02.11.88 Patentblatt 88/44**

(45) Bekanntmachung des Hinweises auf die
Patenterteilung:
**23.01.91 Patentblatt 91/04**

(84) Benannte Vertragsstaaten:
**AT BE CH DE FR GB IT LI LU NL SE**

(56) Entgegenhaltungen:
**WO-A-82/04115**
**DE-A-3 325 200**
**US-A-4 403 572**

(73) Patentinhaber: **Bommer, Rolf**
**Reichlin-von-Meldegg-Strasse 4**
**D-7770 Überlingen am Bodensee (DE)**

(72) Erfinder: **Bommer, Rolf**
**Reichlin-von-Meldegg-Strasse 4**
**D-7770 Überlingen am Bodensee (DE)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**D-7730 VS-Villingen-Schwenningen (DE)**

Courier Press, Leamington Spa, England.

**Beschreibung**

Die Erfindung betrifft einen Brennwert-Heizkessel gemäß dem Oberbegriff des Patentanspruchs 1 und ein Verfahren zu seinem Betreiben.

Als Brennwert-Heizkessel werden solche Heizkessel bezeichnet, bei welchen die Rauchgase bis zur Kondensation abgekühlt werden, wodurch sich eine besonders gute Energieausnützung ergibt. Eine wirksame Kondensation tritt bei diesen Heizkessel nur dann auf, wenn die Rücklauftemperatur des zum Heizkessel zurückströmenden Wärmeträgermediums niedrig und vorzugsweise bei 30 bis 40°C liegt. Bei bekannten Heizkesseln wird diese Rücklauftemperatur nicht erreicht, so daß sie nicht im optimalen Brennwertverhalten betrieben werden. Weiter werden die Heizkessel durch Ein- und Ausschalten des Brenners der jeweiligen von dem gespeisten Wärmeverbraucher benötigten Wärmeleistung angepaßt. Der häufige Start mit schlechtem Brennverhalten verursacht nicht nur einen erheblich höheren Energieverbrauch, sondern auch eine starke Umweltbelastung.

Aus der DE-PS 33 25 200 ist ein Heizkessel bekannt, bei welchem zwei oder mehr Wärmetauscher in Strömungsrichtung der Rauchgase hintereinander angeordnet sind und aufeinanderfolgend von den Rauchgasen eines Gebläsebrenners beaufschlagt werden. Die Wärmeträgerströme dieser Wärmetauscher werden über Heizregister einem Brauchwasser-Schichtenspeicher zugeführt. Das dem zuerst von den Rauchgasen beaufschlagten ersten Wärmetauscher zugeordnete Heizregister ist in der obersten wärmsten Schicht des Schichtenspeichers angeordnet, um die Hauptwärmemenge auf den Schichtenspeicher zu übertragen. Das dem zuletzt von den Rauchgasen beaufschlagten letzten Wärmetauscher zugeordnete Heizregister befindet sich in der untersten, kältesten Schicht des Schichtenspeichers, so daß der den letzten Wärmetauscher durchströmende Wärmeträgerstrom eine für die Kondensation der Rauchgase ausreichend niedrige Temperatur aufweist. Der Schichtenspeicher dient außerdem als pufferspeicher, durch welchen die Häufigkeit des Brennerstarts stark verringert wird. Der Brenner muß nur noch dann gestartet werden, wenn der gespeicherte Warmwasservorrat verbraucht ist, und kann dann ohne Unterbrechung laufen, bis der Schichtenspeicher wieder bis in die untersten Schichten aufgeheizt ist.

Bei diesem bekannten Heizkessel dient der Schichtenspeicher zur Brauchwassererwärmung, während die Heizungsanlage unmittelbar von dem Heizkessel gespeist wird. Um ein häufiges Ein- und Ausschaltendes Brenners zur Anpassung an den Wärmebedarf der Heizungsanlage zu vermeiden, werden die Wärmeträgerströme der Wärmetauscher zwischen der Heizungsanlage und dem Brauchwasser-Schichtenspeicher umgeschaltet. Ist der Brauchwasser-Schichtenspeicher vollständig aufgeheizt, so erfolgt auch hier ein häufiges Ein- und Ausschalten des Brenners zur Anpassung an den Wärmeverbrauch der Heizungsanlage.

Der bekannte Heizkessel arbeitet mit gutem Brennwert, da dem Brauchwasser-Schichtenspeicher zum Auffüllen des entnommenen warmen Brauchwassers kaltes Frischwasser zugeführt wird, so daß sich in der untersten Schicht in der Regel kaltes Frischwasser befindet.

Bei dem bekannten Heizkessel bilden die Wärmetauscher und die in dem Brauchwasser-Schichtenspeicher angeordneten Heizregister jeweils getrennte Kreisläufe, die jeweils eine eigene Pumpe benötigen, was die Installation aufwendig macht.

Der Erfindung liegt die Aufgabe zugrunde, einen Brennwert-Heizkessel und ein Verfahren zu seinem Betreiben zu schaffen, die bei geringem Installationsaufwand ein gutes Brennwertverhalten ermöglichen.

Diese Aufgabe wird erfindungsgemäß gelöst durch die Merkmale des kennzeichnenden Teils des Patentanspruchs 1 und verfahrensmäßig durch die Merkmale des kennzeichnenden Teils des Patentanspruchs 14.

Vorteilhafte Ausführungsformen der Erfindung sind in den Unteransprüchen angegeben.

Erfindungsgemäß ist dem Brennwert-Heizkessel mit wenigstens zwei aufeinanderfolgend von den Rauchgasen beaufschlagten Wärmetauschern ein Schichtenspeicher zugeordnet, der als Pufferspeicher für die Heizungsanlage dient. Der Wärmeträgerstrom des ersten, zuerst von den Rauchgasen beaufschlagten Wärmetauschers durchströmt dabei den oberen Teil des Schichtenspeichers. Nur mit diesem oberen Teil des Schichtenspeichers wird die Heizungsanlage gespeist. Der Rücklauf der Heizungsanlage mündet in einer mittleren Schicht in den Schichtenspeicher, so daß das Heizungswasser nur durch diesen oberen Teil des Schichtenspeichers zirkuliert. Unten in dem Schichtenspeicher wird dagegen eine Schicht mit niedriger Temperatur gespeichert. Auch eine höhere Rücklauftemperatur der Heizungsanlage von 60 bis 80°C beeinflußt diese untere kalte Schicht nicht. Eine höhere Heizungsrücklauftemperatur erhöht nur die Temperatur des Wärmeträgerstromes, der dem ersten Wärmetauscher des Heizkessels zugeführt wird. Da dieser erste Wärmetauscher mit den unmittelbar vom Brenner kommenden heißen Rauchgasen beaufschlagt wird, herrscht an diesem ersten Wärmetauscher stets eine hohe Temperaturdifferenz.

Der letzte Wärmetauscher des Heizkessels wird von den an dem vorhergehenden Wärmetauschern bereits auf etwa 60 bis 80°C abgekühlten Rauchgasen beaufschlagt. Um diese Rauchgase auf die für eine vollständige Kondensation erforderliche Temperatur von etwa 30 bis 40°C abzukühlen, wird diesem letzten Wärmetauscher der Wärmeträgerstrom aus der kalten untersten Schicht des Schichtenspeichers zugeführt. Da den Rauchgasen nur noch eine geringe Wärmemenge zu entnehmen ist, genügt für den letzten Wärmetauscher eine geringe Durchflußmenge. Dadurch muß der untersten Schicht des Schichtenspeichers das kalte Wasser nur in einer geringen Menge entnommen werden. Diese geringe Menge wird wieder ergänzt durch den kalten Heizungsrücklauf beim morgendlichen Anheizvorgang, ggf. durch den Rücklauf einer Teilheizung mit niederer Temperatur oder durch den Rücklauf eines Brauchwasser-Erhitzers. Da der letzte Wärmetauscher des Heizkessels nur eine geringe Durchflußmenge benötigt, sind diese anfallenden Rücklaufmengen mit niedriger Temperatur ausreichend, um stets eine ausreichende Schicht niedriger Temperatur unten im Schichtenspeicher zur Verfügung zu haben.

Die Wärmeträgerströme aller Wärmetauscher des Heizkessels werden gemeinsam durch eine einzige pumpe in die obere Schicht des Schichtenspeichers zurückgeführt, um diese aufzuheizen. Damit trotz dieser gemeinsamen Pumpe durch den brennernahen ersten Wärmetauscher die erforderliche große Durchflußmenge und durch den letzten Wärmetauscher nur eine kleine Durchflußmenge strömt, sind im einfachsten Falle die Rohrleitungsquerschnitte entsprechend den gewünschten Durchflußmengen bemessen. Es kann aber auch eine Einrichtung zur Steuerung der Durchflußmenge vorzugsweise in der Zuleitung des letzten Wärmetauschers vorgesehen sein. Die Steuerbarkeit der Durchflußmenge hat den zusätzlichen Vorteil, daß die Durchflußmenge des letzten Wärmetauschers der jeweiligen Restwärme der Rauchgase angepaßt werden kann.

Bei einer hohen Rücklauftemperatur der Heizungsanlage von z.B. 80°C gelangen die Rauchgase mit mindestens diese Temperatur an den letzten Wärmetauscher, so daß ihnen eine größere Restwärmemenge entzogen werden muß, d.h. die Durchflußmenge des letzten Wärmetauschers vergrößert werden muß. Bei einer niedrigen Rücklauftemperatur der Heizungsanlage von z.B. 60° muß den Rauchgasen nur noch eine geringere Wärmemenge durch den letzten Wärmetauscher entzogen werden, so daß dessen Durchflußmenge verringert werden kann. Dadurch kann die Entnahme aus der kalten untersten Schicht des Schichtenspeichers minimiert werden, um mit einer vorgegebenen Wassermenge niedriger Temperatur eine möglichst lange Zeitdauer der vollständigen Kondensation am letzten Wärmetauscher zu erzielen.

Der Heizkessel mit dem Schichtenspeicher kann zusammen mit dem Kreislauf der Heizungsanlage ein offenes System bilden. Ebenso ist es möglich, den Wärmeträgerstrom der Wärmetauscher gegen den Kreislauf der Heizungsanlage abzuschließen, indem der Wärmeträgerstrom in einem Heizregister durch den Schichtenspeicher geführt wird.

Der Schichtenspeicher verringert auch die Anzahl der Brennerstarts. Der Brenner muß jeweils nur dann gestartet werden, wenn die obere heiße Schicht des Schichtenspeichers durch den Wärmeverbraucher abgebaut wurde. Der Brenner bleibt dann solange in Betrieb, bis diese obere Schicht wieder vollständig aufgeheizt ist.

Der Schichtenspeicher kann auch aus zwei getrennten Behältern für die warmen Schichten und für die untere kalte Schicht bestehen. Dies ist im allgemeinen jedoch nicht notwendig und bedeutet einen höheren Konstruktionsaufwand.

Die Wärmetauscher des Heizkessels können unmittelbar aneinander anschließend angeordnet sein. Ebenso ist es möglich, die Wärmetauscher räumlich getrennt anzuordnen, wobei insbesondere der letzte der Kondensation dienende Wärmetauscher getrennt angeordnet sein kann, z.B. um eine günstigere Abführung des Kondensats zu ermöglichen.

Der erfindungsgemäß Brennwert-Heizkessel kann selbstverständlich nicht nur zum Betrieb einer Heizungsanlage verwendet werden, sondern kann auch mit einer Brauchwasser-Erwärmung verbunden sein. Hierzu kann zweckmäßigerweise von dem in den Wärmetauschern erhitzten Wärmeträgerstrom über ein Ventil oder eine pumpe eine Teilmenge zu einem Warmwassererzeuger abgezweigt werden.

Die durch den Schichtenspeicher erreichte Pufferwirkung erlaubt es, den Heizkessel mit einer minimalen Wärmeträgermenge zu betreiben, so daß er praktisch nur nach Art eines Durchlauferhitzers arbeitet. Der Heizkessel selbst hat damit eine sehr geringe Wärmekapazität und -trägheit. Er erreicht beim Brennerstart daher sehr schnell die optimale Betriebstemperatur, was einmal den Wirkungsgrad verbessert und andererseits die Schadstoffbildung verringert.

Außerdem kann der Heizkessel auf diese Weise sehr klein und leicht gebaut werden, dadurch ist es möglich, den Heizkessel unmittelbar auf den Schichtenspeicher anzuordnen, so daß der Schichtenspeicher und der Heizkessel eine kompakte Einheit bilden, die platzsparend und formschön ist.

Im folgenden wird die Erfindung anhand von in der Zeichnung dargestellten Ausführungsbeispielen näher erläutert. Es zeigen:

Figur 1 einen Heizkessel gemäß der Erfindung mit einem gegen die Heizungsanlage offenen Kreislauf,

Figur 2 einen Heizkessel gemäß der Erfindung mit einem gegen die Heizungsanlage geschlossenen Kreislauf,

Figur 3 einen Heizkessel gemäß der Erfindung in einer Abwandlung der Ausführungsform der Figur 1 und

Figur 4 einen Heizkessel gemäß der Erfindung in einer weiteren Abwandlung der Ausführungsform der Fig. 3.

In der Zeichnung sind nur die erfindungswesentlichen Teile schematisch dargestellt. Soweit Einzelheiten in der Zeichnung nicht dargestellt und nachfolgend nicht beschrieben sind, sind diese in an sich bekannter Weise ausgebildet.

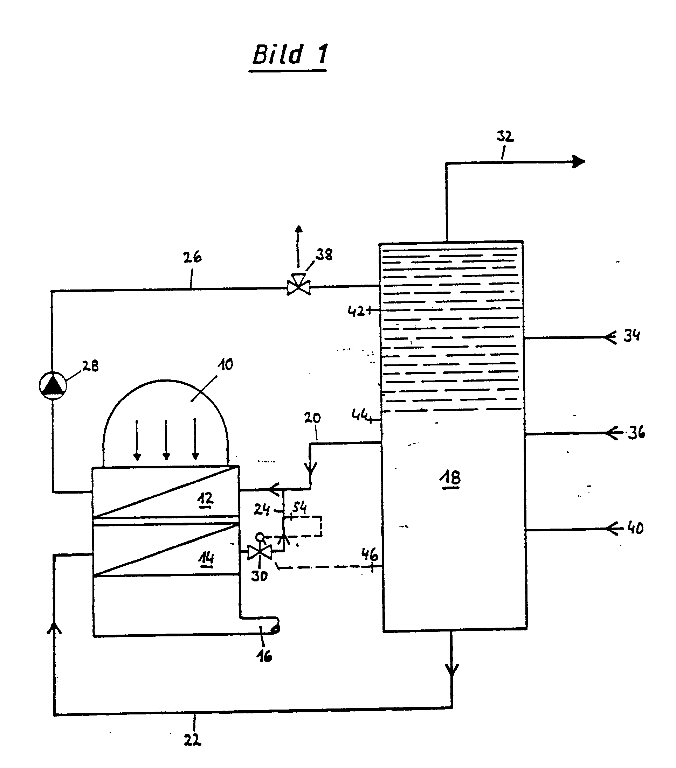

Wie Figur 1 zeigt, weist der Heizkessel eine oben angeordnete Brennkammer 10 auf, in welche ein nicht dargestellter Gas- oder Ölgebläsebrenner feuert. Die heißen Rauchgase des Brenners strömen, wie in der Zeichnung durch Pfeile angedeutet ist, nach unten, wobei sie aufeinanderfolgend durch zwei Wärmetauscher 12 und 14 hindurchtreten. Unten treten die Rauchgase durch ein Abgasrohr 16 aus dem Heizkessel aus.

Dem Heizkessel ist ein Schichtenspeicher 18 mit einem Volumen von ca. 200 bis 800 Litern zugeordnet. Dem Schichtenspeicher 18 wird in einer mittleren Höhe über eine Leitung 20 Wasser entnommen und dem zuerst von den Rauchgasen beaufschlagten ersten Wärmetauscher 12 zugeführt. Unten am Boden wird dem Schichtenspeicher 18 Wasser über eine Leitung 22 entnommen und dem zuletzt von den Rauchgasen beaufschlagten letzten Wärmetauscher 14 zugeführt. Das aus dem Wärmetauscher 14 austretende Wasser wird über eine Leitung 24 der Eintrittsseite des ersten Wärmetauschers 12 zugeführt. Die Austrittsseite des ersten Wärmetauschers 12 ist über eine Leitung 26, in die eine Pumpe 28 eingesetzt ist, mit der oberen Schicht des Schichtenspeichers 18 verbunden.

Die Pumpe 28 saugt Wasser aus dem Schichtenspeicher 18 einerseits über die Leitung 20 und den ersten Wärmetauscher 12 aus einer mittleren Schicht des Schichtenspeichers 18 und andererseits über die Leitung 22, den letzten Wärmetauscher 14 und den ersten Wärmetauscher 12 aus der untersten Schicht des Schichtenspeichers 18. Das Mengenverhältnis wird dabei durch das Querschnittsverhältnis der Leitungen 20 und 22 bestimmt. Dieses Querschnittsverhältnis ist so bemessen, daß die Durchflußmenge durch die Leitung 20 und damit durch den ersten Wärmetauscher 12 etwa das zehnfache der Durchflußmenge durch die Leitung 22 und damit durch den letzten Wärmetauscher 14 beträgt.

In die Leitung 24 ist vorzugsweise ein steuerbares Regulierventil 30 eingebaut, das zusätzlich zu dem Querschnittsverhältnis eine Steuerung der Durchflußmenge durch den letzten Wärmetauscher 14 ermöglicht. Das Regulierventil 30 wird, wie in der Zeichnung gestrichelt angedeutet ist, durch einen an der Leitung 24 angeordneten Temperaturfühler 54 und einen im untersten Bereich des Schichtenspeichers 18 angeordneten Temperaturfühler 46 gesteuert. Der Temperaturfühler 46 mißt die Temperatur des aus dem Schichtenspeicher 18 über die Leitung 22 in den Wärmetauscher 14 eintretenden Wassers, während der Temperaturfühler 54 die Temperatur des aus dem Wärmetauscher 14 austretenden Wassers mißt. Steigt die Temperaturdifferenz zwischen den Temperaturfühlern 54 und 46 an, so bedeutet dies, daß den Rauchgasen noch eine große Restwärme zu entziehen ist, und das Regulierventil 30 vergrößert die Durchflußmenge durch den letzten Wärmetauscher 14.

Eine Heizkörper-Heizung wird über eine oben aus dem Schichtenspeicher 18 austretende Vorlaufleitung 32 gespeist. Der Rücklauf 34 der Heizkörper-Heizung mündet im oberen Drittel in den Schichtenspeicher 18. Weiter kann eine Niedertemperaturheizung, z.B. eine Fußbodenheizung, von dem Schichtenspeicher 18 gespeist werden, deren Rücklauf 36 etwa in mittlerer Höhe in den Schichtenspeicher 18 mündet.

Schließlich kann durch ein in die Leitung 26 eingesetztes Ventil 38 der Vorlauf für einen Warmwasserbereiter abgezweigt werden, dessen Rücklauf 40 auf etwa einem Drittel der Höhe des Schichtenspeichers 18 von unten in diesen mündet.

Der Schichtenspeicher 18 weist weiter drei Temperaturfühler 42, 44 und 46 auf. Der Temperaturfühler 42 befindet sich im oberen Bereich des Schichtenspeichers 18 etwas unterhalb der Höhe der Einmündung der Leitung 26. Der Temperaturfühler 44 befindet sich im mittleren Höhenbereich des Schichtenspeichers 18 etwas oberhalb der Höhe des Austritts der Leitung 20. Der Temperaturfühler 46 befindet sich im unteren Bereich des Schichtenspeichers 18 etwa auf einem Fünftel der Höhe des Schichtenspeichers und unterhalb des Rücklaufes 40 des Warmwasserbereites.

Der Brenner bleibt solange in Betrieb, bis das über die Leitung 26 zugeführte heiße Wasser nach unten bis zu dem mittleren Temperaturfühler 44 vorgedrungen ist, wie in der Zeichnung gestrichelt angedeutet ist. Dabei kann die Leistung der Brennerflamme gegebenenfalls lastabhängig der jeweiligen Wärmeanforderung angepaßt werden. Dann ist der Schichtenspeicher geladen und der Brenner und die Pumpe 28 werden abgeschaltet.

Wird über die Vorlaufleitung 32 heißes Heizwasser dem Schichtenspeicher 18 entnommen, so wird abgekühltes Rücklaufwasser über die Rückläufe 34 und 36 zurückgeführt. Dieses sinkt in der heißen oberen Schicht des Schichtenspeichers 18 nach unten und sammelt sich an der unteren Grenzfläche dieser heißen Schicht.

Die untere Grenzfläche der Heißwasserschicht wandert auf diese Weise nach oben. Erreicht diese Grenzschicht den oberen Temperaturfühler 42, so werden der Brenner und die Pumpe 28 wieder in Betrieb gesetzt und der Schichtenspeicher 18 wird wieder geladen.

Unterhalb des mittleren Temperaturfühlers 44 bildet sich eine Schicht niedrigerer Temperatur aus, die im wesentlichen durch die Rücklauftemperatur der Heizungsanlage bestimmt ist. Das durch die Leitung 20 dem ersten Wärmetauscher 12 zugeführte Wasser hat die Temperatur dieser mittleren Schicht, so daß die Rauchgase an dem ersten Wärmetauscher 12 im wesentlichen auf die Rücklauftemperatur der Heizungsanlage abgekühlt werden.

Nimmt die Temperatur in den Rückläufen 34 und 36 niedrige Temperaturwerte unter etwa 30°C an, wie dies beispielsweise bei dem morgendlichen Anlaufen der Heizung der Fall ist, so sinkt dieses kalte Rücklaufwasser in dem Schichtenspeicher 18 nach unten. Ebenso sinkt das kalte Wasser des Rücklaufs 40 des Warmwasserbereiters in dem Schichtenspeicher 18 nach unten. Dadurch sammelt sich in dem Schichtenspeicher 18 am Boden eine Schicht von kaltem Wasser mit einer Temperatur unter ca. 30°C. Diese kalte Schicht hat ein Volumen von beispielsweise ca. 100 bis 150 l. Die kalte Schicht wird nur durch die relativ geringe Entnahme über die Leitung 22 abgebaut. Auch wenn kein ausreichend kaltes Rücklaufwasser nachströmt, reicht die kalte Schicht daher aus, um über eine Brennerlaufdauer von ca. 10 bis 15 Stunden die Rauchgase am letzten Wärmetauscher 14 bis zur Kondensation abzukühlen.

Weist das über die Leitung 20 dem ersten Wärmetauscher 12 zugeführte Wasser eine relativ niedrige Temperatur von z.B. ca. 60°C auf, so nimmt die Temperaturdifferenz zwischen dem Wasser in den Leitungen 20 und 22 ab und das Regulierventil 30 drosselt die Durchflußmenge des kalten Wassers durch den letzten Wärmetauscher 14. Aufgrund der stärkeren Abkühlung der Rauchgase am ersten Wärmetauscher 12 ist nämlich den Rauchgasen auch nur noch eine geringere Restwärme am letzten Wärmetauscher 14 zu entnehmen.

Bei dem Ausführungsbeispiel der Figur 1 ist der Wärmetauscherkreislauf gegen den Heizungskreislauf offen. Dasselbe Wasser strömt sowohl durch die Wärmetauscher 12 und 14 als auch durch die Heizungskreisläufe und den Kreislauf des Warmwasserbereiters.

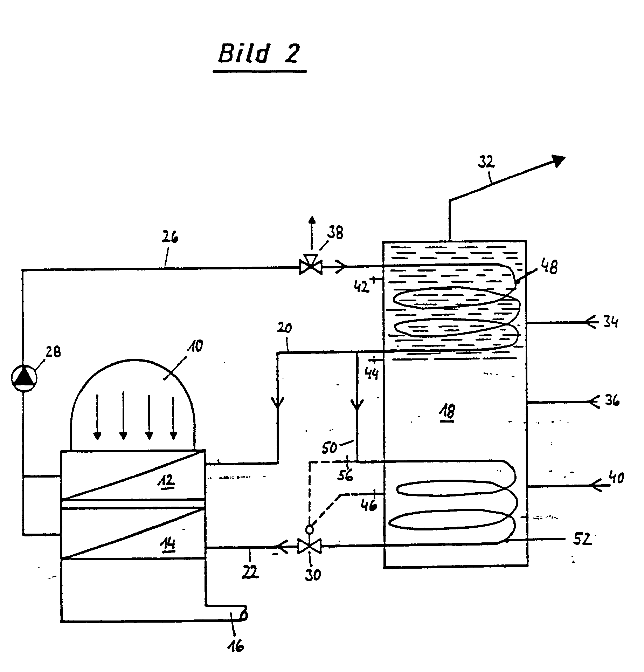

In Figur 2 ist ein abgewandeltes Ausführungsbeispiel dargestellt, bei welchem die Wärmetauscherkreisläufe gegen den Heizungskreislauf abgeschlossen sind. Das den ersten Wärmetauscher 12 durchströmende Wasser wird über die Leitung 26 durch ein Heizregister 48 geführt, das in der oberen heißen Schicht des Schichtenspeichers 18 angeordnet ist und gelangt von dem Heizregister 48 über die Leitung 20 wieder zum ersten Wärmetauscher 12. Von der Leitung 20 ist eine Leitung 50 abgezweigt, die zu einem in der untersten kalten Schicht des Schichtenspeichers 18 angeordneten Heizregister 52 führt, von welchem das Wasser wiederum über die Leitung 22 dem letzten Wärmetauscher 14 zugeführt wird.

Auch hier bestimmt das Querschnittsverhältnis der Leitungen 20 und 22 das Verhältnis der durch das obere Heizregister 48 und den ersten Wärmetauscher 12 strömenden Wassermenge zu der durch das untere Heizregister 52 und den letzten Wärmetauscher 14 strömenden Wassermenge. Die Durchflußmenge durch den letzten Wärmetauscher 14 kann auch hier durch ein Regulierventil 30 verändert werden. Das Regulierventil 30 wird durch einen an der Leitung 50 angebrachten Temperaturfühler 56 und den in der unteren kalten Schicht des Schichtenspeichers 18 angeordneten Temperaturfühler 46 gesteuert. Der Temperaturfühler 56 mißt die Temperatur des Wassers, die dem ersten Wärmetauscher 12 zugeführt wird und somit die Mindesttemperatur der aus dem ersten Wärmetauscher 12 austretenden, den letzten Wärmetauscher 14 beaufschlagenden Rauchgase. Steigt die Temperaturdifferenz zwischen den Temperaturfühlern 56 und 46 an, so bedeutet dies, daß den Rauchgasen in dem letzten Wärmetauscher 14 eine größere Restwärmemenge bis zur Kondensation entzogen werden muß. Das Regulierventil 30 vergrößert daher die Durchflußmenge durch den letzten Wärmetauscher 14.

In dem Ausführungsbeispiel der Figur 2 wird das Wasser nach dem Durchströmen des letzten Wärmetauschers 14 unmittelbar der Pumpe 28 zugeführt, ohne zuvor nochmals durch den ersten Wärmetauscher 12 geleitet zu werden. Wegen des Verhältnisses der Durchflußmengen durch den ersten Wärmetauscher 12 und den letzten Wärmetauscher 14 bedeutet dies keine erhebliche Absenkung der Temperatur des über die Leitung 26 dem Schichtenspeicher 18 zugeführten Wassers.

Der geschlossene Wärmetauscherkreislauf der Figur 2 hat den Vorteil, daß in den Wärmetauscherkreisläufen keine Verkalkungsprobleme auftreten und gegebenenfalls auch ein anderes Wärmeträgermedium als Wasser verwendet werden kann.

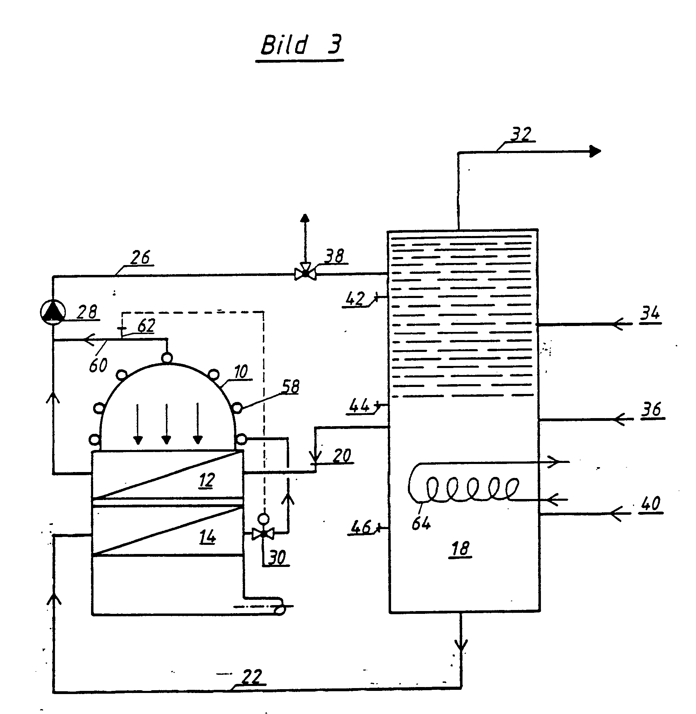

Figur 3 zeigt eine Abwandlung des Ausführungsbeispieles der Figur 1. Soweit dieses Ausführungsbeispiel mit dem Ausführungsbeispiel der Figur 1 übereinstimmt, wird auf die vorstehende Beschreibung verwiesen.

Bei dem Ausführungsbeispiel der Figur 3 wird das aus dem letzten Wärmetauscher 14 austretende Wasser nicht dem ersten Wärmetauscher 12 zugeführt, sondern wird zur Kühlung der Wand der Brennkammer 10 des Heizkessels durch Rohrschlangen 58 geführt, die in wärmeleitender Berührung außen auf der Wand der Brennkammer 10 angeordnet sind. Das beim Durchströmen der Rohrschlangen 58 erwärmte Wasser wird über die Leitung 60 in die Leitung 26 eingespeist.

In dem letzten Wärmetauscher 14 wird den Rauchgasen nur noch eine geringe Wärmemenge zur Kondensation entzogen. Die geringe durch den letzten Wärmetauscher 14 strömende Menge an kaltem Wasser aus der untersten Schicht des Schichtenspeichers 18 wird daher in dem Wärmetauscher 14 nur mäßig erwärmt. Die geringe mäßig vorgewärmte Wassermenge ist dazu geeignet, die Wand der Brennkammer 10 über die Rohrschlangen 58 sanft so zu kühlen, daß deren Temperatur bei voller Brennerleistung nicht über ca. 600°C ansteigt und bei gedrosselter Brennerleistung nicht unter ca. 180°C absinkt. Die Temperatur der Verbrennungsgase in der Brennkammer 10 wird daher unter etwa 600°C gehalten, so daß eine NOx-Bildung nicht in umweltbelastender Menge auftreten kann. Andererseits kann die Brennerleistung zur Anpassung an den Wärmebedarf abgesenkt werden, z.B. in den Übergangsjahreszeiten oder im Sommer, wenn nur warmes Brauchwasser benötigt wird, ohne daß eine Unterkühlung der Brennerflamme an der Wand der Brennkammer auftritt.

Das Regulierventil 30 steuert den Durchfluß durch den letzten Wärmetauscher 14 einerseits entsprechend der Temperatur des über die Leitung 22 aus der untersten Schicht des Schichtenspeichers 18 dem Wärmetauscher 14 zugeführten Wassers, um die Kondensation der Rauchgase an dem letzten Wärmetauscher 14 zu gewährleisten, und andererseits entsprechend der mittels eines Fühlers 62 festgestellten Temperatur des aus den Rohrschlangen 58 austretenden Wassers in der Leitung 60. Steigt die Temperatur des Wassers in der Leitung 60 zu stark an, so muß die Durchflußmenge erhöht werden, um ein Ansteigen der
Temperatur an der Innenwand der Brennkammer
10 über den Wert von ca. 600°C zu verhindern, bei
welchem die NOx-Bildung verstärkt beginnt. Sinkt
die Temperatur in der Leitung 60 zu stark ab, so
wird die Durchflußmenge reduziert, um eine zu
starke Abkühlung der Wand der Brennkammer 10
und damit eine Unterkühlung der Brennerflamme
zu verhindern, was zu einer unvollständigen Verbrennung mit schlechtem Wirkungsgrad und
hohem Schadstoffgehalt und zu einer Kondensation an der Brennkammerwand führen kann.

In dem Ausführungsbeispiel der Figur 3 ist
schließlich noch als weitere Möglichkeit im unteren Bereich des Schichtenspeichers 18 ein zusätzliches Heizregister 64 vorgesehen, durch welches
kaltes Brauchwasser zur Vorwärmung hindurchgeführt wird. Dadurch wird gewährleistet, daß in
der untersten Schicht des Schichtenspeichers 18
stets auch bei lang dauerndem Brennerlauf eine
ausreichende Menge kalten Wassers vorhanden
ist, um in dem letzten Wärmetauscher 14 den
Verbrennungsgasen die Restwärme zur Kondensation zu entziehen.

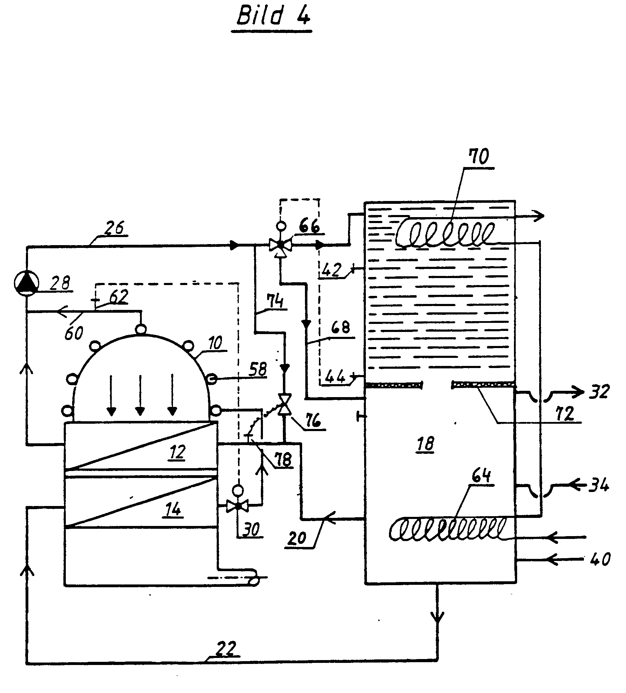

Eine weitere Abwandlung des Ausführungsbeispieles der Figur 3 ist in Figur 4 dargestellt.
Soweit dieses Ausführungsbeispiel mit dem Ausführungsbeispiel der Figur 3 übereinstimmt, wird
auf die dortige Beschreibung verwiesen.

Der obere Bereich des Schichtenspeichers 18
wird über die Leitung 26 auf eine konstante
Temperatur von z.B. bis zu 80°C geladen. Hierzu
steuern die Temperaturfühler 42 und 44 ein in die
Leitung 26 eingesetztes Ventil 66. Ist die obere
Schicht bis zu dem Temperaturfühler 44 auf die
höhere Temperatur aufgeladen, so wird das Ventil 66 umgeschaltet und verbindet die Leitung 26
über eine Leitung 68 mit dem unteren Bereich des
Schichtenspeichers 18.

Der untere Bereich des Schichtenspeichers 18
wird mit einer z.B. über einen Außentemperaturfühler gesteuerten niedrigeren Temperatur von
z.B. 30 bis 75°C betrieben. Die Vorlaufleitung 32
für die Heizung tritt aus der obersten Schicht des
unteren Bereichs des Schichtenspeichers 18 aus.
Die Rücklaufleitungen 34 und 40 münden in den
unteren Schichten des unteren Bereichs. Der
obere Bereich mit der hohen Temperatur des
Schichtenspeichers 18 dient für Wärmeverbraucher mit höherem Temperaturniveau, z.B. insb.
für die Brauchwassererwärmung. Hierzu wird das
kalte Brauchwasser über das Heizregister 64
zunächst im unteren Bereich des Schichtenspeichers 18 vorgewärmt und dann durch ein im
oberen Bereich angeordnetes weiteres Heizregister 70 hindurchgeführt und auf die Temperatur
des oberen Bereichs von z.B. bis 80°C erwärmt.

Zwischen dem oberen Bereich und dem unteren Bereich des Schichtenspeichers 18 kann gegebenenfalls eine isolierende Trennwand 72 mit
einer Durchtrittsöffnung angeordnet sein.

Damit dem oberen Wärmetauscher 12 nicht zu
kaltes Wasser über die Leitung 20 zugeführt wird,
kann ein Teilstrom des erhitzten Wassers der
Leitung 26 über eine abzweigende Leitung 74
dem Zulauf der Leitung 20 zugemischt werden.
Ein in die Leitung 74 eingesetztes Drosselventil 76
steuert diesen zugemischten Teilstrom entsprechend der mittels eines Temperaturfühlers 78
gemessenen Temperatur am Eintritt des Wärmetauschers 12.

Es ist aus der vorstehenden Beschreibung ohne
weiteres ersichtlich, daß die Erfindung nicht auf
die Verwendung von zwei Wärmetauschern im
Heizkessel beschränkt ist. Es kann gegebenenfalls
auch noch ein weiterer Wärmetauscher zwischen
dem ersten Wärmetauscher 12 und dem letzten
Wärmetauscher 14 angeordnet sein, der dann mit
Wasser aus einer mittleren Schicht des Schichtenspeichers 18 gespeist wird. Einerseits bedeutet
ein solcher weiterer Wärmetauscher einen höheren Konstruktionsaufwand, andererseits ergibt
sich aber bereits eine stärkere Abkühlung der
Rauchgase, so daß die durch den letzten Wärmetauscher zu entziehende Restwärme geringer ist
und die Kondensation mit einer geringeren Wassermenge in der untersten kalten Schicht des
Schichtenspeichers 18 zuverlässig erfolgt.

**Patentansprüche**

1. Brennwert-Heizkessel zum Betreiben wenigstens einer Heizungsanlage mit wenigstens zwei
Wärmetauschern (12, 14), die in Strömungsrichtung der Rauchgase eines Gebläsebrenners hintereinander angeordnet sind, mit einem einen
oder mehrere Wärmeverbraucher speisenden
Schichtenspeicher (18), wobei eine obere Schicht
des Schichtenspeichers (18) durch den in Strömungsrichtung der Rauchgase ersten Wärmetauscher (12) beheizbar ist, wobei dem in Strömungsrichtung der Rauchgase letzten Wärmetauscher (14) das Wärmeträgermedium aus der
untersten Schicht des Schichtenspeichers (18)
zuführbar ist, wobei das Wärmeträgermedium
durch eine gemeinsame Pumpe (28) durch alle
Wärmetauscher (12, 14) förderbar ist, wobei die
Austrittsseiten aller Wärmetauscher (12, 14) über
eine gemeinsame Leitung (26) mit dem oberen
Bereich des Schichtenspeichers (18) verbindbar
sind, und wobei der Durchtrittsquerschnitt der
zum ersten Wärmetauscher (12) führenden Leitungen (20) ein Mehrfaches des Durchtrittsquerschnittes der zum letzten Wärmetauscher (14)
führenden Leitung (22) ist, dadurch gekennzeichnet, daß die einen Wärmeverbraucher bildende
Heizungsanlage durch die obere Schicht des
Schichtenspeichers (18) gespeist ist, daß die das
Wärmeträgermedium dem ersten Wärmetauscher (12) zuführende Leitung (20) im mittleren
Höhenbereich aus dem Schichtenspeicher (18)
austritt, und daß die Rücklaufleitungen (34, 36, 40)
der Wärmeverbraucher im mittleren Höhenbereich in den Schichtenspeicher (18) münden.

2. Brennwert-Heizkessel nach Anspruch 1,
dadurch gekennzeichnet, daß der Durchtrittsquerschnitt der zum letzten Wärmetauscher (14) führenden Leitung (22) eine Einrichtung zur Steuerung der Durchflußmenge aufweist.

3. Brennwert-Heizkessel nach Anspruch 2, dadurch gekennzeichnet, daß die Einrichtung zur Steuerung der Durchflußmenge ein temperaturgesteuertes Regulierventil (30) ist.

4. Brennwert-Heizkessel nach einem der Ansprüche 1 bis 3, dadurch gekennzeichnet, daß die Austrittsseite des letzten Wärmetauschers (14) mit der Eintrittsseite des ersten Wärmetauschers (12) verbunden ist.

5. Brennwert-Heizkessel nach einem der Ansprüche 1 bis 3, dadurch gekennzeichnet, daß die Austrittsseiten der Wärmetauscher (12, 14) parallel an die gemeinsame Leitung (26) angeschlossen sind.

6. Brennwert-Heizkessel nach einem der Ansprüche 1 bis 3, dadurch gekennzeichnet, daß die Austrittsseite des letzten Wärmetauschers (14) mit einer Rohrschlange (58) verbunden ist, die die Wand der Brennkammer (10) des Gebläsebrenners kühlt.

7. Brennwert-Heizkessel nach einem der Ansprüche 1 bis 6, dadurch gekennzeichnet, daß die pumpe (28) in die zum Schichtenspeicher (18) führende gemeinsame Leitung (26) eingesetzt ist.

8. Brennwert-Heizkessel nach einem der Ansprüche 1 bis 7, dadurch gekennzeichnet, daß die Leitungen (20, 22) zum Zuführen des Wärmeträgermediums zu den Wärmetauschern (12, 14) und die Leitung (26) zum Zuführen des Wärmeträgermediums von den Wärmetauschern (12, 14) zu dem Schichtenspeicher (18) offen in den Schichtenspeicher (18) einmünden.

9. Brennwert-Heizkessel nach einem der Ansprüche 1 bis 7, dadurch gekennzeichnet, daß das die Wärmetauscher (12, 14) durchströmende Wärmeträgermedium in geschlossenen Heizregistern (48, 52) durch den Schichtenspeicher (18) geführt ist.

10. Brennwert-Heizkessel nach Anspruch 9, dadurch gekennzeichnet, daß die das Wärmeträgermedium von den Wärmetauschern (12, 14) zu dem Schichtenspeicher (18) führende Leitung (26) an ein in der oberen Schicht des Schichtenspeichers (18) angeordnetes Heizregister (48) angeschlossen ist, daß die Austrittsseite dieses Heizregisters (48) einerseits an die zur Eintrittsseite des ersten Wärmetauschers (12) führende Leitung (20) und andererseits an die Eintrittsseite eines in der untersten Schicht des Schichtenspeichers (18) angeordnetes Heizregister (52) angeschlossen ist und daß die Austrittsseite dieses Heizregisters (52) in der untersten Schicht mit der zur Eintrittsseite des letzten Wärmetauschers (14) führenden Leitung (22) verbunden ist.

11. Brennwert-Heizkessel nach einem der Ansprüche 1 bis 10, dadurch gekennzeichnet, daß in der von den Wärmetauschern (12, 14) zum Schichtenspeicher (18) führenden Leitung (26) eine bezüglich der Durchflußmenge steuerbare Abzweigung vorgesehen ist, die zu einem Warmwasserbereiter führt.

12. Brennwert-Heizkessel nach einem der Ansprüche 1 bis 10, dadurch gekennzeichnet, daß der Schichtenspeicher (18) zusätzlich einen oberen Bereich aufweist, durch welchen Wärmeverbraucher mit hohem Temperaturniveau gespeist werden, und daß die gemeinsame Leitung (26) über ein Ventil (66) umschaltbar unterhalb dieses oberen Bereiches in den Schichtenspeicher (18) eingeleitet wird, wenn der obere Bereich auf das hohe Temperaturniveau geladen ist.

13. Brennwert-Heizkessel nach einem der Ansprüche 1 bis 11, dadurch gekennzeichnet, daß der Heizkessel auf dem Schichtenspeicher (18) angeordnet und mit diesem zu einer kompakten Baueinheit verbunden ist.

14. Verfahren zum Betreiben eines Brennwert-Heizkessels nach Anspruch 1, dadurch gekennzeichnet, daß die Wärmeträgerströme sämtlicher Wärmetauscher (12, 14) gemeinsam der oberen Schicht des Schichtenspeichers zugeführt werden, daß die Durchflußmenge des Wärmeträgerstromes des ersten Wärmetauschers (12) ein Mehrfaches der Durchflußmenge des Wärmeträgerstromes des letzten Wärmetauschers (14) beträgt und daß die Rückläufe (34, 36) der Wärmeverbraucher oberhalb der untersten Schicht in den Schichtenspeicher (18) geleitet werden.

15. Verfahren nach Anspruch 14, dadurch gekennzeichnet, daß die Durchflußmenge zumindest des Wärmeträgerstromes des letzten Wärmetauschers (14) steuerbar ist.

16. Verfahren nach Anspruch 15, dadurch gekennzeichnet, daß die Durchflußmenge des Wärmeträgerstromes des letzten Wärmetauschers (14) in Abhängigkeit von dessen Erwärmung durch die beaufschlagenden Rauchgase gesteuert und bei zunehmender Erwärmung vergrößert wird.

**Revendications**

1. Chaudière à condensation pour exploiter au moins une installation de chauffage, avec au moins deux échangeurs thermiques (12, 14) qui sont disposés l'un derrière l'autre dans le sens d'écoulement des gaz brûlés d'un brûleur à soufflante, avec un accumulateur en couches (18) alimentant un ou plusieurs utilisateurs de chaleur, une couche supérieure de l'accumulateur en couches (18) étant chauffée par le premier échangeur thermique (12) dans le sens d'écoulement des gaz brûlés, le fluide caloporteur provenant de la couche la plus basse de l'accumulateur en couches (18) pouvant être amené au dernier échangeur thermique (14) dans le sens d'écoulement des gaz brûlés, le fluide caloporteur pouvant être circulé à travers tous les échangeurs thermiques (12, 14) par une pompe commune (28), les côtés de sortie de tous les échangeurs thermiques (12, 14) pouvant être reliés par l'intermédiaire d'une conduite commune (26) à la région supérieure de l'accumulateur en couches (18), et la section de passage de la conduite (20) menant au premier échangeur thermique (12) étant égale à un multiple de la section de passage de la conduite (22) menant au dernier échangeur thermique (14), caractérisée en ce que l'installation de chauffage constituant un utilisateur de chaleur est alimentée par la couche supérieure de l'accumulateur en couches (18), en ce que la conduite (20) amenant le fluide caloporteur au premier échangeur thermique (12) sort de l'accumulateur en couches (18) dans la région de hauteur médiane, et en ce que les conduites de retour (34, 36, 40) des utilisateurs de chaleur débouchent dans la région de hauteur médiane dans l'accumulateur en couches (18).

2. Chaudière à condensation selon la revendication 1, caractérisée en ce que la section de passage de la conduite (22) menant au dernier échangeur thermique (14) présente un dispositif pour commander le débit de passage.

3. Chaudière à condensation selon la revendication 2, caractérisée en ce que le dispositif pour commander le débit de passage est une soupape de réglage (30) commandée par la température.

4. Chaudière à condensation selon l'une des revendications 1 à 3, caractérisée en ce que le côté de sortie du dernier échangeur thermique (14) est relié au coté d'entrée du premier échangeur thermique (12).

5. Chaudière à condensation selon l'une des revendications 1 à 3, caractérisée en ce que les côtés de sortie des échangeurs thermiques (12, 14) sont raccordés en parallèle à la conduite commune (26).

6. Chaudière à condensation selon l'une des revendications 1 à 3, caractérisée en ce que le coté de sortie du dernier échangeur thermique (14) est relié à un serpentin (58) qui refroidit la paroi de la chambre de combustion (10) du brûleur à soufflante.

7. Chaudière à condensation selon l'une des revendications 1 à 6, caractérisée en ce que la pompe (28) est incorporée dans la conduite commune (26) menant à l'accumulateur en couches (18).

8. Chaudière à condensation selon l'une des revendications 1 à 7, caractérisée en ce que les conduites (20, 22) pour amener le fluide caloporteur aux échangeurs thermiques (12, 14) et la conduite (26) pour amener le fluide caloporteur des échangeurs thermiques (12, 14) à l'accumulateur en couches (18) débouchent à découvert dans l'accumulateur en couches (18).

9. Chaudière à condensation selon l'une des revendications 1 à 7, caractérisée en ce que le fluide caloporteur traversant les échangeurs thermiques (12, 14) est guidé dans des registres de tirage fermés (48, 52) à travers l'accumulateur en couches (18).

10. Chaudière à condensation selon la revendication 9, caractérisée en ce que la conduite (26) amenant le fluide caloporteur des échangeurs thermiques (12, 14) à l'accumulateur en couches (18) est raccordée à un registre de tirage (48) disposé dans la couche supérieure de l'accumulateur en couches (18), en ce que le côté de sortie de ce registre de tirage (48) est raccordé d'une part à la conduite (20) menant au côté d'entrée du premier échangeur thermique (12) et d'autre part au côté d'entrée d'un registre de tirage (52) disposé dans la couche la plus basse de l'accumulateur en couches (18), et en ce que le côté de sortie de ce registre de tirage (52) dans la couche la plus basse est relié à la conduite (22) menant au côté d'entrée du dernier échangeur thermique (14).

11. Chaudière à condensation selon l'une des revendications 1 à 10, caractérisée en ce qu'une dérivation, dont le débit de passage peut être commandé et qui mène à un préparateur d'eau chaude, est prévue dans la conduite (26) menant des échangeurs thermiques (12, 14) à l'accumulateur en couches (18).

12. Chaudière à condensation selon l'une des revendications 1 à 10, caractérisée en ce que l'accumulateur en couches (18) présente en plus une région supérieure qui alimente des utilisateurs de chaleur à un niveau de température élevé, et en ce que la conduite commune (26) peut, avec possibilité de commutation par l'intermédiaire d'une valve (66), être introduite en dessous de cette région supérieure dans l'accumulateur en couches (18), lorsque la région supérieure est chargée au niveau de température élevé.

13. Chaudière à condensation selon l'une des revendications 1 à 11, caractérisée en ce que la chaudière est disposée sur l'accumulateur en couches (18) et assemblée avec ce dernier en une unité constructive compacte.

14. Procédé pour exploiter une chaudière à condensation selon la revendication 1, caractérisé en ce que les flux caloporteurs des différents échangeurs thermiques (12, 14) sont amenés conjointement à la couche supérieure de l'accumulateur en couches, en ce que le débit de passage du flux caloporteur du premier échangeur thermique (12) est égal à un multiple du débit de passage du flux caloporteur du dernier échangeur thermique (14), et en ce que les retours (34, 36) des utilisateurs de chaleur sont introduits au-dessus de la couche la plus basse dans l'accumulateur en couches (18).

15. Procédé selon la revendication 14, caractérisé en ce qu'on peut commander le débit de passage au moins du flux caloporteur du dernier échangeur thermique (14).

16. Procédé selon la revendication 15, caractérisé en ce que le débit de passage du flux caloporteur du dernier échangeur thermique (14) est commandé en fonction de son réchauffement par les gaz brûlés qui le sollicitent, et est augmenté lorsque le réchauffement augmente.

## Claims

1. A heater of the type in which vapour in the products of combustion is condensed to retrieve the latent heat of vapourisation for use in operating at least one heating plant and comprising at least two heat exchangers (12, 14) which are arranged one after the other in the direction of flow of the flue gases of a furnace and a layered heat storage unit (18) supplying one or more heat consuming units, wherein an upper layer of the layered heat storage unit (18) can be heated by the first heat exchanger (12) in the direction of flow of the flue gases, wherein the heat transfer medium can be supplied from the bottom layer of the layered heat storage unit (18) to the last heat exchanger (14) in the direction of flow of the flue gases, wherein the heat transfer medium can be pumped through all the heat exchangers (12, 14) by means of a common pump (28), wherein the output side of all the heat exchangers (12, 14) can be connected through a common pipeline (26) to the upper region of the layered heat storage unit (18), and wherein the cross-sectional area of passage in the pipeline (20) leading to the first heat exchanger (12) is several times the cross-sectional area of passage in the pipeline (22) leading to the last heat exchanger (14), characterized in that a heating plant which forms a heat consuming unit is supplied by means of the upper layer of the layered heat storage unit (18), the heat exchange medium emerges into the pipeline (20) leading to the first heat exchanger (12) from the mid-height region of the layered heat storage unit (18), and the return flow pipelines (34, 36, 40) from the heat consuming unit open into the mid-height region of the layered heat storage unit (18).

2. A heater according to Claim 1, characterized in that the cross-sectional area of passage in the pipeline (22) leading to the last heat exchanger (14) comprises a device for controlling the throughflow.

3. A heater according to Claim 2, characterized in that the device for controlling the throughflow is a temperature-controlled regulating valve (30).

4. A heater according to any one of Claims 1 to 3, characterized in that the outlet side of the last heat exchanger (14) is connected to the inlet side of the first heat exchanger (12).

5. A heater according to any one of Claims 1 to 3, characterized in that the outlet sides of the heat exchangers (12, 14) are connected in parallel to the common pipeline (26).

6. A heater according to any one of Claims 1 to 3, characterized in that the outlet side of the last heat exchanger (14) is connected to a spiral tube (58) which cools the wall of the combustion chamber (10) of the furnace.

7. A heater according to any one of Claims 1 to 6, characterized in that the pump (28) is installed in the common pipeline (26) leading to the layered heat storage unit (18).

8. A heater according to any one of Claims 1 to 7, characterized in that the pipelines (20, 22) for supplying the heat transfer medium to the heat exchangers (12, 14) and the pipeline (26) for supplying the heat transfer medium from the heat exchangers (12, 14) to the layered heat storage unit (18) open into the layered heat storage unit (18).

9. A heater according to any one of Claims 1 to 7, characterized in that the heat transfer medium flowing through the heat exchangers (12, 14) is led through the layered heat storage unit (18) in closed heat registers (48, 52).

10. A heater according to Claim 9, characterized in that the pipeline (26) carrying the heat transfer medium from the heat exchangers (12, 14) to the layered heat storage unit (18) is connected to a heat register (48) arranged in the upper layer of the layered heat storage unit (18), the outlet side of this heat register (48) is connected on the one hand to the inlet side of the pipeline (20) leading to the first heat exchanger (12) and on the other hand to the inlet side of a heat register (52) arranged in the bottom layer of the layered heat storage unit (18), and the outlet side of this heat register (52) in the bottom layer is connected to the inlet side of the pipeline (22) leading to the last heat exchanger (14).

11. A heater according to any one of Claims 1 to 10, characterized in that the pipeline (26) leading from the heat exchangers (12, 14) to the layered heat storage unit (18) is provided with a branch, controllable in relation to the flow rate, which leads to a hot water heater.

12. A heater according to any one of Claims 1 to 10, characterized in that, the layered heat storage unit (18) also contains an upper region by means of which heat consuming devices receive a high temperature supply, and the common pipeline (26) can be switched by means of a valve (66) so that it leads into the layered heat storage unit (18) below this upper region when the upper region is charged at the high temperature level.

13. A heater according to any one of Claims 1 to 11, characterized in that the heater is arranged on the layered heat storage unit (18) and is connected to this in a compact constructional unit.

14. A process for operating a heater in accordance with Claim 1, characterized in that the flows of the heat transfer medium from all the heat exchangers (12, 14) are supplied together to the upper layer of the layered heat storage unit, the rate of flow of the heat transfer medium through the first heat exchanger (12) is several times the rate of flow of the heat transfer medium through the last heat exchanger (14), and the return flows (34, 36) from the heat consuming devices are led into the layered heat storage unit (18) above the bottom layer.

15. A process according to Claim 14, characterized in that the flow rate of the heat transfer medium can be controlled at least in the last heat exchanger (14).

16. A process according to Claim 15, characterized in that the flow rate of the heat transfer medium in the last heat exchanger (14) is controlled in dependence on the heating of the latter by the flue gases admitted into it and is increased when the heating increases.

## *Bild 1*

## *Bild 2*

## Bild 3

EP 0 288 695 B1

*Bild 4*

4